# EUROPÄISCHE PATENTSCHRIFT

(11) **EP 3 918 649 B1**
(45) Veröffentlichungstag und Bekanntmachung des Hinweises auf die Patenterteilung: **11.01.2023**
(21) Anmeldenummer: 20701733.6
(22) Anmeldetag: 22.01.2020
(51) Int. Cl.: H01M 50/202, H01M 50/204, H01M 10/48, H01M 10/613, H01M 10/6554

(54) **VERFAHREN UND SYSTEM ZUR THERMISCHEN ANBINDUNG EINER WÄRMEQUELLE EINES BATTERIESYSTEMS AN EINE WÄRMESENKE EINES BATTERIESYSTEMS**
METHOD AND SYSTEM FOR THERMALLY CONNECTING A HEAT SOURCE OF A BATTERY SYSTEM TO A HEAT SINK OF A BATTERY SYSTEM
PROCÉDÉ ET SYSTÈME DE LIAISON THERMIQUE ENTRE UNE SOURCE DE CHALEUR D'UN SYSTÈME DE BATTERIE ET UN DISSIPATEUR DE CHALEUR D'UN SYSTÈME DE BATTERIE

(30) Priorität: 28.01.2019 DE 102019102003
(43) Veröffentlichungstag der Anmeldung: 08.12.2021
(73) Patentinhaber: Lisa Dräxlmaier GmbH, 84137 Vilsbiburg (DE)
(72) Erfinder: SEIDL, Stefan, 84028 Landshut (DE); HAHN, Alexander, 91341 Röttenbach (DE)
(86) Internationale Anmeldenummer: PCT/EP2020/051485
(87) Internationale Veröffentlichungsnummer: WO 2020/156899

(56) Entgegenhaltungen:
- DE-A1-102008 059 961
- DE-A1-102013 220 690
- DE-A1-102017 116 420

## Beschreibung

### Technisches Gebiet

Die vorliegende Erfindung betrifft ein Verfahren und ein System zur thermischen Anbindung einer Wärmequelle eines Batteriesystems an eine Wärmesenke eines Batteriesystems.

### Stand der Technik

In Batteriesystemen gibt es üblicherweise eine Vielzahl von Wärmequellen, wie beispielsweise Batteriezellen, zu Batteriezellen verschaltete Batteriemodule, stromführende Komponenten, wie beispielsweise Sicherungen, Stromschienen, Relais und dergleichen. Insbesondere in leistungsfähigen Batteriesystemen ist es daher üblich und erforderlich, Wärmesenken, z.B. in Form von flüssigkeitsdurchströmten Kühlsystemen oder dergleichen, vorzusehen, um überschüssige Wärme von solchen Wärmequellen abführen zu können.

Die Patentschrift DE 10 2008 059961 offenbart ein Verfahren und ein System zur thermischen Anbindung einer Batterie an eine Wärmesenke.

Es ist an sich bekannt, beispielsweise zur thermischen Anbindung von Batteriezellen an Kühlflächen thermische Schnittstellen vorzusehen. Derartige thermische Schnittstellen werden üblicherweise durch Wärmeleitmaterialien in Form von sogenannten Gapfillern bzw. thermischen Interface-Materialien oder auch Wärmeleitklebern gebildet. Derartige Wärmeleitmaterialien zur thermischen Anbindung von Batteriezellen an Kühlflächen erfordern üblicherweise eine definierte Schichtdicke.

Der thermische Widerstand einer solchen Schicht aus einem Wärmeleitmaterial und eine darüber erzielbare Kühlleistung sind in einem Batteriesystem bei gegebenem Material und gegebenen Flächen üblicherweise nur noch durch die Schichtdicke des betreffenden Wärmeleitmaterials beeinflussbar. Insbesondere beim Einsatz mehrere Batteriezellen in einem Batteriesystem ist es üblicherweise wünschenswert, eine gezielte und vor allem gleichmäßige Temperaturverteilung im Batteriesystem, insbesondere bezüglich der Batteriezellen, zu erzielen. Denn die Alterungsgeschwindigkeit von Batteriesystemen ist besonders durch geringe Temperaturunterschiede zwischen den einzelnen Batteriezellen positiv beeinflussbar.

Zu dünn dürfen derartige Wärmeleitmaterialien allerdings auch nicht ausfallen. Denn üblicherweise muss, insbesondere bei der thermischen Anbindung von stromführenden Komponenten und Batteriezellen, in der Regel auch eine elektrische Isolationswirkung durch das Wärmeleitmaterial realisiert und sichergestellt werden.

Bei der Herstellung und Montage derartiger Batteriesysteme ergibt sich meist zwangsläufig die Problematik, dass verschiedenste Komponenten, wie Wärmequellen und Wärmsenken, mit einer gewissen Toleranz behaftet sind. Dies kann eine gezielte thermische Anbindung einer Wärmequelle eines Batteriesystems an eine Wärmesenke eines Batteriesystems durchaus erschweren, da beispielsweise fertigungsbedingte Unebenheiten, Welligkeiten, unterschiedliche Lagen von Anbindungspunkten und dergleichen eine exakte und wunschgemäße Einstellung eines Wärmeleitmaterials hinsichtlich seiner Dicke erschweren können.

Beispielsweise werden zur Sicherstellung einer Mindestschichtdicke beim Wärmeleitmaterial für eine hinreichend elektrische Isolation Abstandshalter verwendet, auch als Spacer bezeichnet, welche beispielsweise im Wärmeleitmaterial eingebettet werden. Dies kann allerdings, insbesondere wenn das Wärmeleitmaterial auch eine Klebefunktion haben soll, eine Verbindung einer Wärmquelle mit einer Wärmesenke mechanisch nachteilig beeinflussen. Zudem kann durch derartige Abstandshalter bzw. Spacer zwar eine Mindestdicke beim Wärmeleitmaterial sichergestellt werden, allerdings keine gleichmäßige Schichtdicke.

Eine elektrische Isolation kann beispielsweise auch über eine zusätzliche Schutzfolie sichergestellt werden, dadurch entstehen allerdings zusätzliche Kosten. Der damit einhergehende Produktionsaufwand ist auch entsprechend hoch. Zudem kann durch eine derartige Maßnahme unter Umständen eine Schwachstelle im Fall einer strukturellen Verklebung entstehen. Zudem werden oftmals Isolationsmessungen erst am fertigen Batteriesystem bzw. an fertigen Komponenten des Batteriesystems durchgeführt, wodurch Fehler im Hinblick auf eine unzureichend elektrische Isolation oder eine ungünstige Schichtdicke betreffend das Wärmeleitmaterial erst im Nachhinein erkannt werden kann. Unter Umständen erforderliche Reparaturen sind dann aufwendig und zum Teil auch wirtschaftlich auch nicht mehr sinnvoll.

Die DE 10 2008 059961 A1 betrifft eine Batterie, umfassend einen Zellverbund aus mehreren parallel und/oder seriell miteinander verschalteten Einzelzellen, die als Flachzellen ausgeführt sind. Die Einzelzellen umfassen jeweils mindestens zwei gegenüberliegende und zueinander korrespondierende Gehäuseseitenwände, zwischen denen ein Zellinneres und ein das Zellinnere umgebender Gehäuserahmen angeordnet sind. Weiterhin umfasst die Batterie eine Kühlplatte, welche mit dem Zellverbund Wärme leitend verbunden ist. Dabei sind ein Gehäuserahmen einer jeden Einzelzelle und die Kühlplatte mit zueinander korrespondierendem Steg und Ausnehmung versehen, wodurch eine jede Einzelzelle an der Kühlplatte definiert anordbar ist.

Die DE 10 2013 220690 A1 betrifft ein Verfahren zur Herstellung eines Batteriemoduls mit mehreren, zu einem Zellstapel zusammengefassten, Batteriezellen.

Die DE 10 2017 116420 A1 betrifft ein Wärmeleitmaterialinstallationsverfahren umfassend das Bewegen eines Materials durch eine Leitung zu einem Hohlraum in einer Batterieanordnung. Die Leitung ist zumindest teilweise durch eine Wärmetauscherplatte der Batterieanordnung bereitgestellt. Das Verfahren schließt ferner das Halten des Materials in dem Hohlraum ein, um ein Wärmeleitmaterial zwischen der Wärmetauscherplatte und mindestens einer Batteriezellenbaugruppe bereitzustellen.

### Beschreibung der Erfindung

Es ist die Aufgabe der vorliegenden Erfindung, eine Lösung bereitzustellen, mittels welcher eine thermische Anbindung einer Wärmequelle eines Batteriesystems an eine Wärmesenke des Batteriesystems auf thermodynamisch möglichst optimale und zudem besonders einfache Weise erfolgen kann.

Diese Aufgabe wird durch ein Verfahren sowie durch ein System zur thermischen Anbindung einer Wärmequelle eines Batteriesystems an eine Wärmesenke eines Batteriesystems mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zur thermischen Anbindung einer Wärmequelle eines Batteriesystems an eine Wärmesenke eines Batteriesystems wird ein Setzvorgang mittels einer Setzvorrichtung durchgeführt, bei welchem ein Abstand zwischen einer elektrisch leitenden Gehäusefläche der Wärmequelle und einer elektrisch leitenden Wärmeübertragungsfläche, die ein Teil der Wärmesenke ist oder an die Wärmesenke angrenzt, unter Verpressen eines dazwischen angeordneten elektrisch isolierenden Wärmeleitmaterials verringert wird. Während des Setzvorgangs wird mittels einer Messvorrichtung fortlaufend eine Kapazitätsmessung zwischen der Gehäusefläche und der Wärmeübertragungsfläche durchgeführt. Auf Basis der Kapazitätsmessung wird fortlaufend eine Schichtdicke des Wärmeleitmaterials überwacht und zudem wird auf Basis der Kapazitätsmessung die Setzvorrichtung mittels einer Steuereinrichtung bis zum Erreichen einer vorgegebenen Schichtdicke des Wärmeleitmaterials angesteuert.

Die Wärmequelle kann eine Batteriezelle und/oder eine Elektronikkomponente umfassen, wobei die Wärmeübertragungsfläche Teil eines Kühlsystems oder eine Komponente sein kann, die an das Kühlsystem angrenzt. Die Wärmeübertragungsfläche kann also unmittelbarer Bestandteil der Wärmesenke oder ein zwischen der eigentlichen Wärmesenke und der Gehäusefläche angeordnetes Bauteil, beispielswiese in Form einer Schottwand oder dergleichen sein. Bei der Wärmequelle kann es sich beispielsweise um eine einzelne Batteriezelle oder auch um ein Batteriemodul handeln, welches mehrere miteinander verschaltete Batteriezellen aufweist. Bei der Wärmequelle kann es sich beispielsweise auch um verschiedenste Elektronikkomponenten, wie beispielsweise Sicherungen, Stromschienen, Relais und dergleichen handeln. Die Wärmequelle kann auch eine ganze Baugruppe sein, welche eine oder mehrere Batteriezellen sowie mehrere stromführende Komponenten bzw. Elektronikkomponenten umfasst.

Wesentlich bei dem erfindungsgemäßen Verfahren ist, dass während der Durchführung des Setzvorgangs mit Hilfe der besagten fortlaufenden Kapazitätsmessung zwischen der Gehäusefläche und der Wärmeübertragungsfläche eine Überwachung einer momentanen Schichtdicke des Wärmeleitmaterials zwischen der Gehäusefläche und der Wärmeübertragungsfläche stattfindet. Die Schichtdicke des als thermische Interfaceschicht dienenden Wärmeleitmaterials wird also während des Setzvorgangs, bei welchem es sich zusätzlich auch noch um einen Fügevorgang handeln kann, mittels kapazitiver Messung zwischen den Substraten, also der Gehäusefläche und der Wärmeübertragungsfläche, vorzugsweise kontinuierlich ermittelt. Die Kapazitätsmessung kann ein Messsignal bereitstellen, welches die gemessene Kapazität repräsentiert. Dabei repräsentiert die gemessene Kapazität die Schichtdicke.

Basierend darauf kann ein Steuersignal für die Setzvorrichtung generiert werden, gemäß welcher diese den Setzvorgang steuert, sodass eine vorgegebenen Schichtdicke des Wärmeleitmaterials zwischen der Gehäusefläche und der Wärmeübertragungsfläche sichergestellt werden kann. Mit anderen Worten kann das Messsignal verarbeitet werden und unter Verwendung des Messsignals das Steuersignal erzeugt werden. Ein sich am Ende des Setzvorgangs ergebender Abstand zwischen der Gehäusefläche und der Wärmeübertragungsfläche und somit eine Schichtdicke des Wärmeleitmaterials kann so unabhängig von Fertigungstoleranzen des Batteriesystems zuverlässig und einfach wiederholbar eingestellt werden.

Beispielsweise gibt es fertigungsbedingt oftmals relativ große Unebenheiten an Batterieböden bzw. Zellböden. Derartige Unebenheiten stellen für das erfindungsgemäße Verfahren zur Einstellung der vorgegebenen Schichtdicke des Wärmeleitmaterials kein Problem dar. Denn durch die fortlaufende Kapazitätsmessung ist auf einfache und zuverlässige Weise eine fortlaufende Überwachung der Schichtdicke des Wärmeleitmaterials während des Setzvorgangs möglich. Ohne weitere aufwendige Messungen kann so die Schichtdicke des Wärmeleitmaterials während des gesamten Setzvorgangs zuverlässig überwacht werden. Sobald die vorgegebene Schichtdicke des Wärmeleitmaterials erreicht ist, kann der Setzvorgang zuverlässig und vor allem rechtzeitig gestoppt werden.

Durch das erfindungsgemäße Verfahren lassen sich also ganz gezielt und exakt Schichtdicken bezüglich des Wärmeleitmaterials einstellen. Dadurch können thermische und elektrische Eigenschaften - also vor allem die elektrisch isolierenden Eigenschaften und Wärmeleiteigenschaften des Wärmeleitmaterials - gezielt eingestellt werden. So können mittels des erfindungsgemäßen Verfahrens beispielsweise Batteriezellen unabhängig von Toleranzen eines Zellbodens oder einer Schottwand, welche als Wärmeübertragungsfläche dienen kann, auf ein identisches Spaltmaß im gesamten Batteriesystem gesetzt bzw. eingestellt werden, ohne dass dabei beispielsweise jeweilige Böden der Batteriezellen lokal genau vermessen werden müssen.

Mit Hilfe des erfindungsgemäßen Verfahrens kann auch eine Überdosierung bezüglich des Wärmeleitmaterials entfallen, welche ansonsten oftmals herangezogen wird, um toleranzbedingte Abweichungen im Hinblick auf jeweilige Spaltvolumina kompensieren zu können. Mittels des erfindungsgemäßen Verfahrens ist es also nicht nur möglich, eine Schichtdicke des Wärmeleitmaterials exakt einzustellen, sondern auch noch den Einsatz des Wärmeleitmaterials ohne eine Überdosierung einzustellen. Durch den reduzierten Materialeinsatz hinsichtlich des Wärmeleitmaterials können das Gewicht des gesamten Batteriesystems und damit verbundene Kosten sinken.

Das Isolationsvermögen durch das verpresste Wärmeleitmaterial, welches als thermische Schnittstelle dient, kann durch Vorgabe eines definierten Mindestspaltmaßes, also der vorgegebenen Schichtdicke, sichergestellt werden, ohne dass zusätzliche Maßnahmen, wie beispielsweise die eingangs erwähnten Schutzfolien, Abstandshalter, Überdimensionierungen der Schichtdicke und dergleichen benötigt werden.

Handelt es sich bei der Wärmequelle beispielsweise um eine Batteriezelle, so ist es mittels des erfindungsgemäßen Verfahrens möglich, bei allen Batteriezellen des Batteriesystems den gleichen thermischen Widerstand zur jeweils betreffenden Wärmesenke herzustellen und damit eine homogene Temperaturverteilung bezüglich sämtlicher Batteriezellen des Batteriesystems sicherzustellen. Die Alterung der Batteriezellen kann dadurch verlangsamt werden, da diese eine sehr gleiche Temperaturverteilung aufweisen. Natürlich ist das erfindungsgemäße Verfahren nicht nur auf Batteriezellen beschränkt. Mittels des erfindungsgemäßen Verfahrens können unterschiedlichste Wärmequellen eines Batteriesystems an unterschiedlichste Wärmesenken eines Batteriesystems in der beschriebenen Weise angebunden werden.

Eine mögliche Ausführungsform der Erfindung sieht vor, dass die Kapazitätsmessung mittels einer Wechselspannungsmessung erfolgt. Dadurch ist eine kontinuierliche bzw. fortlaufende Kapazitätsmessung während des Setzvorgangs möglich.

Eine weitere mögliche Ausführungsform der Erfindung sieht vor, dass die Kapazitätsmessung mit einer Messfrequenz zwischen 1 kHz und 100 kHz, insbesondere zwischen 5 kHz und 20 kHz, erfolgt. Die Kapazitätsmessung kann also mit relativ hohen Messfrequenzen erfolgen, wodurch eine sehr schnelle Steuerung bzw. Regelung des Setzvorgangs ermöglicht wird. Die Kapazitätsmessung beeinflusst also nicht die Geschwindigkeit des Setzvorgangs, da die Messfrequenz hinreichend hoch gewählt werden kann, sodass im Vergleich zu einer Setzbewegung während des Setzvorgangs sehr viele einzelne Messungen vorgenommen werden können, um die Schichtdicke des Wärmeleitmaterials fortlaufend zu überwachen.

Eine weitere mögliche Ausführungsform der Erfindung sieht vor, dass Ergebnisse mehrerer einzelner Kapazitätsmessungen gemittelt und basierend darauf eine jeweilige Schichtdicke des Wärmeleitmaterials ermittelt wird. Dadurch kann sich eine besonders genaue Ermittlung der jeweiligen Schichtdicke des Wärmeleitmaterials ergeben. Selbst wenn einzelne Kapazitätsmessungen etwas verfälscht sein sollten, ist es durch die Mittelung mehrerer Kapazitätsmessungen möglich, fortlaufend die jeweilige Schichtdicke des Wärmeleitmaterials während des Setzvorgangs besonders exakt zu ermitteln.

Gemäß einer weiteren möglichen Ausführungsform der Erfindung ist es vorgesehen, dass bei der Kapazitätsmessung fortlaufend ein Messsignal an der Gehäuseseite und/oder der Wärmeübertragungsfläche angelegt und zur Kapazitätsmessung ausgewertet wird. Das Messsignal kann beispielsweise direkt während des Setzens durch einen Greifer einer verwendeten Setzvorrichtung an einem Zellbecher einer Batteriezelle aufgegeben werden. Dadurch, dass das Messsignal fortlaufend an der Gehäuseseite und/oder der Wärmeübertragungsfläche der Setzpartner bzw. Fügepartner angelegt und zur Kapazitätsmessung ausgewertet wird, kann die Kapazitätsmessung und somit die Überwachung des Setzvorgangs besonders exakt erfolgen.

Eine weitere mögliche Ausführungsform der Erfindung sieht vor, dass auf Basis der Kapazitätsmessung während des Setzvorgangs eine Prozessüberwachung im Hinblick auf einen Kurzschluss zwischen der Gehäusefläche und der Wärmeübertragungsfläche und/oder Lufteinschlüsse im Wärmeleitmaterial durchgeführt wird. Tritt beispielsweise ein Kurzschluss durch Fremdpartikel im Wärmeleitmaterial zwischen der Gehäusefläche und der Wärmeübertragungsfläche während des Setzvorgangs auf, so kann dies auf Basis der Kapazitätsmessung ganz einfach und schnell detektiert werden. Denn bei einem Kurzschluss versagt quasi die Kapazitätsmessung, da die Kapazität dann gegen Null geht. Ein Einschluss von Fremdpartikeln im Wärmeleitmaterial kann also auf diese Weise erkannt werden. Zudem ist es auch möglich, Lufteinschlüsse im Wärmeleitmaterial über die Kapazitätsmessung zu detektieren. Denn Luft weist eine ganz andere Dielektrizitätskonstante als das Wärmeleitmaterial auf, was sich auch entsprechend auf die Kapazitätsmessung auswirkt und dann detektierbar ist. Unterschiedlichste Fehler können somit im Zuge der Kapazitätsmessung während des Setzvorgangs bereits erkannt werden.

Eine weitere mögliche Ausführungsform der Erfindung sieht vor, dass falls bei der Prozessüberwachung ein Fehler festgestellt wird, der Setzvorgang unterbrochen und falls das Wärmeleitmaterial noch nicht ausgehärtet ist, der Setzvorgang erneut unter Behebung des Fehlers durchgeführt wird. Gegebenenfalls mögliche Fehlerbehebungen können somit mehr oder weniger direkt durchgeführt werden, da auf Basis der Kapazitätsmessung gewisse Fehler bereits während des Setzvorgangs erkannt werden können. Ansonsten gegebenenfalls bei einer Endprüfung des Batteriesystems erst erkennbare Fehler können so schon bereits während des Setzvorgangs erkannt und - sofern möglich - auch behoben werden.

Das erfindungsgemäße System zur Anbindung einer Wärmequelle eines Batteriesystems an eine Wärmesenke eines Batteriesystems umfasst eine Setzvorrichtung, welche dazu ausgelegt ist, einen Setzvorgang durchzuführen, bei welchem ein Abstand zwischen einer elektrisch leitenden Gehäusefläche der Wärmequelle und einer elektrisch leitenden Wärmeübertragungsfläche, welche Teil der Wärmesenke ist oder an die Wärmesenke angrenzt, unter Verpressen eines dazwischen angeordneten elektrisch isolierenden Wärmeleitmaterials verringert wird. Des Weiteren umfasst das System eine Messvorrichtung, welche dazu ausgelegt ist, während des Setzvorgangs fortlaufend eine Kapazitätsmessung zwischen der Gehäusefläche und der Wärmeübertragungsfläche durchzuführen. Zudem umfasst das System eine Steuereinrichtung, welche dazu eingerichtet ist, basierend auf der Kapazitätsmessung eine Schichtdicke des Wärmeleitmaterials zu überwachen und die Setzvorrichtung bis zum Erreichen einer vorgegebenen Schichtdicke des Wärmeleitmaterials anzusteuern. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zur Durchführung der Verfahrensschritte aufweist. Bei der Setzvorrichtung kann es sich beispielsweise um einen Roboter oder auch um anderweitige Vorrichtungen handeln, die dazu geeignet sind, den besagten Setzvorgang durchzuführen. Die Messvorrichtung und die Steuereinrichtung können separate Komponenten bzw. Module sein. Alternativ ist es auch beispielsweise möglich, dass die Messvorrichtung und die Steuereinrichtung in einer Art Mess- und Auswertemodul integriert ausgebildet sind.

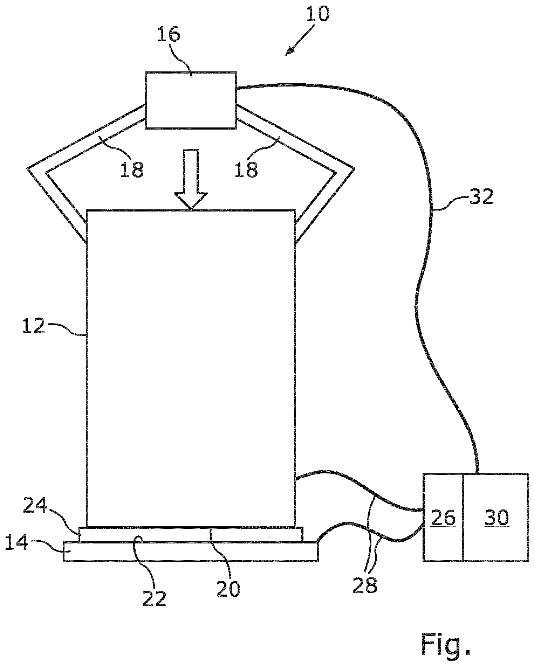

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehen in der Beschreibung genannten Merkmale und Merkmalskombinationen sowie die nachfolgend in der Figurenbeschreibung und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in der einzigen Figur eine schematische Darstellung eines Systems zur thermischen Anbindung einer Batteriezelle an eine Kühlplatte unter Vermittlung eines Wärmeleitmaterials.

Ein System 10 zum thermischen Anbinden einer Batteriezelle 12 an eine Kühlplatte 14 eines nicht weiter dargestellten Batteriesystems ist in einer schematischen Ansicht in der einzigen Figur gezeigt. Die Batteriezelle 12 und die Kühlplatte 14 stellen bei der nachfolgenden Erläuterung nur exemplarische Beispiele für mögliche Wärmequellen bzw. Wärmesenken in einem Batteriesystem dar.

Das System 10 umfasst eine Setzvorrichtung 16 in Form eines Roboters oder dergleichen, welche dazu ausgelegt ist, unter Verwendung jeweiliger Arme 18 einen Setzvorgang durchzuführen, bei welchem ein Abstand zwischen einer elektrisch leitenden Gehäusefläche 20 der Batteriezelle 12 und einer elektrisch leitenden Wärmeübertragungsfläche 22 der als Wärmesenke dienenden Kühlplatte 14 unter Verpressen eines dazwischen angeordneten elektrisch isolierenden Wärmeleitmaterials 24 verringert wird. Dafür kann die Setzvorrichtung 16 mit ihren Armen 18 die Batteriezelle 12 ergreifen und in Richtung der Kühlplatte 14 bewegen. Währenddessen wird das zwischen der Gehäusefläche 20 und der Wärmeübertragungsfläche 22 angeordnete Wärmeleitmaterial 24 verpresst. Das Wärmeleitmaterial 24 zuvor auf der Gehäusefläche 20 und/oder der Wärmeübertragungsfläche 22 aufgetragen.

Das System 10 umfasst zudem eine Messvorrichtung 26, welche über Leitungen 28 mit der Batteriezelle 12 und der Kühlplatte 14 verbunden ist. Die Messvorrichtung 26 ist dazu ausgelegt, während des Setzvorgangs fortlaufend eine Kapazitätsmessung zwischen der Gehäusefläche 20 und der Wärmeübertragungsfläche 22 durchzuführen. Schließlich umfasst das System 10 noch eine Steuereinrichtung 30, welche über eine Leitung 32 mit der Setzvorrichtung 16 signaltechnisch verbunden ist. Die Steuereinrichtung 30 ist dazu eingerichtet, basierend auf der Kapazitätsmessung eine jeweils momentane Schichtdicke des Wärmeleitmaterials 24 während des Setzvorgangs zu überwachen und die Setzvorrichtung 16 bis zum Erreichen einer vorgegebenen Schichtdicke des Wärmeleitmaterials 24 anzusteuern.

Während also der Setzvorgang durchgeführt wird, bei welchem ein Abstand zwischen der elektrisch leitenden Gehäusefläche 20 der Batteriezelle 12 und der elektrisch leitenden Wärmeübertragungsfläche 22 der Kühlplatte 14 unter Verpressen des dazwischen angeordneten elektrisch isolierenden Wärmeleitmaterials 24 verringert wird, führt die Messvorrichtung 26 fortlaufend die besagte Kapazitätsmessung durch. Die Kapazitätsmessung erfolgt dabei mittels einer Wechselspannungsmessung. Dabei kann beispielsweise eine Messfrequenz zwischen 1 kHz und 100 kHz, insbesondere zwischen 5 kHz und 20 kHz, vorgesehen sein. Bei der Kapazitätsmessung wird fortlaufend über die Leitungen 28 ein Messsignal an der Gehäusefläche 20 und/oder der Wärmeübertragungsfläche 22 angelegt und zur Kapazitätsmessung ausgewertet. Insbesondere können Ergebnisse mehrerer einzelner Kapazitätsmessungen gemittelt werden, wobei basierend auf dieser Mittelung dann eine jeweilige momentane Schichtdicke des Wärmeleitmaterials 24 ermittelt wird.

Die Messvorrichtung 26 gibt entsprechende Ergebnisse der Kapazitätsmessungen fortlaufend an die Steuereinrichtung 30 weiter. Die Steuereinrichtung 30 generiert basierend auf der fortlaufenden Kapazitätsmessung bzw. basierend auf den Ergebnissen der fortlaufenden Kapazitätsmessung entsprechende Steuersignale zur Ansteuerung der Setzvorrichtung 16. Im einfachsten Fall sendet die Steuereinrichtung 30 einfach über die Leitung 32 ein Stoppsignal an die Setzvorrichtung 16, sobald im Zuge der Kapazitätsmessung ermittelt wird, dass die vorgegebene Schichtdicke bei dem Wärmeleitmaterial 24 erreicht worden ist. Auch wäre es möglich z.B. mit geringer werdender Dicke des Wärmeleitmaterials 24 die Setzbewegung - also die Bewegung der Batteriezelle 12 in Richtung der Kühlplatte 14 - zu verlangsamen. Die Setzbewegung wird zudem vorzugsweise auch abgestimmt auf die mechanische Belastbarkeit der Batteriezelle 12 und der Kühlplatte 14 gesteuert.

Darüber hinaus ist die Messvorrichtung 26 und/oder die Steuereinrichtung 30 dazu eingerichtet, auf Basis der Kapazitätsmessung während des Setzvorgangs eine Prozessüberwachung durchzuführen. Insbesondere ist es möglich, mittels der Kapazitätsmessung Kurzschlüsse zwischen der Gehäusefläche 20 und der Wärmeübertragungsfläche 22 zu detektieren, welche beispielsweise durch Fremdpartikel im Wärmeleitmaterial 24 verursacht werden können.

Darüber hinaus ist es auch möglich, auf Basis der Kapazitätsmessung Lufteinschlüsse im Wärmeleitmaterial 24 zu detektieren. Falls im Zuge der Prozessüberwachung ein Fehler festgestellt wird, kann der Setzvorgang unterbrochen werden. Falls das Wärmeleitmaterial 24 dann noch nicht ausgehärtet ist, kann der Setzvorgang zum Beispiel erneut unter Behebung des betreffenden Fehlers - sofern möglich - erneut durchgeführt werden. Ansonsten gegebenenfalls erst schwer oder zu einem späteren Zeitpunkt detektierbare Fehler, die im Zuge eines Setzvorgangs auftreten können, können so schon bereits während des Setzvorgangs durch eine Art Online-Prozessüberwachung durch die Kapazitätsmessung festgestellt werden. So ist es beispielsweise möglich, nicht nur die Spaltdicke zwischen der Batteriezelle 12 und der Kühlplatte 14 und somit die Schichtdicke des Wärmeleitmaterials 24 besonders exakt und gleichmäßig einzustellen, sondern zudem ist es auch noch möglich, verschiedenste Fehler mittels der Kapazitätsmessung während des Setzvorgangs zu erfassen und gegebenenfalls dann auch direkt zu beheben.

Wie bereits erwähnt, sind die Batteriezelle 12 und die Kühlplatte 14 nur stellvertretend und beispielhaft für mögliche Wärmequellen bzw. Wärmesenken eines Batteriesystems zu verstehen. Grundsätzlich kann das erläuterte System 10 und erläuterte Verfahren zur thermischen Anbindung verschiedenster Wärmequellen eines Batteriesystems an verschiedenste Wärmesenken eines Batteriesystems verwendet werden.

### BEZUGSZEICHENLISTE

- 10: System
- 12: Batteriezelle
- 14: Kühlplatte
- 16: Setzvorrichtung
- 18: Arme der Setzvorrichtung
- 20: Gehäusefläche
- 22: Wärmeübertragungsfläche
- 24: Wärmeleitmaterial
- 26: Messvorrichtung
- 28: Leitungen der Messvorrichtung
- 30: Steuereinrichtung
- 32: Leitung der Steuereinrichtung

## Patentansprüche

1. Verfahren zur thermischen Anbindung einer Wärmequelle (12) eines Batteriesystems an eine Wärmesenke (14) des Batteriesystems, umfassend die Schritte:
- Durchführen eines Setzvorgangs mittels einer Setzvorrichtung (18), bei welchem ein Abstand zwischen einer elektrisch leitenden Gehäusefläche (20) der Wärmequelle (12) und einer elektrisch leitenden Wärmeübertragungsfläche (22), die ein Teil der Wärmesenke (14) ist oder an die Wärmesenke (14) angrenzt, unter Verpressen eines dazwischen angeordneten elektrisch isolierenden Wärmeleitmaterials (24) verringert wird;
- Durchführen einer fortlaufenden Kapazitätsmessung zwischen der Gehäusefläche (20) und der Wärmeübertragungsfläche (22) während des Setzvorgangs mittels einer Messvorrichtung (26);
- Überwachen einer Schichtdicke des Wärmeleitmaterials (24) und Steuern der Setzvorrichtung (18) mittels einer Steuereinrichtung bis zum Erreichen einer vorgegebenen Schichtdicke des Wärmeleitmaterials (24) auf Basis der Kapazitätsmessung.

2. Verfahren nach Anspruch 1,
**dadurch gekennzeichnet, dass**
die Wärmequelle (12) eine Batteriezelle und/oder eine Elektronikkomponente umfasst, wobei die Wärmesenke (14) Teil eines Kühlsystems des Batteriesystems ist.

3. Verfahren nach Anspruch 1 oder 2,
**dadurch gekennzeichnet, dass**
die Kapazitätsmessung mittels einer Wechselspannungsmessung erfolgt.

4. Verfahren nach einem der vorhergehenden Ansprüche,
**dadurch gekennzeichnet, dass**
die Kapazitätsmessung mit einer Messfrequenz zwischen 1 kHz und 100 kHz, insbesondere zwischen 5 kHz und 20 kHz, erfolgt.

5. Verfahren nach einem der vorhergehenden Ansprüche,
**dadurch gekennzeichnet, dass**
Ergebnisse mehrerer einzelner Kapazitätsmessungen gemittelt und basierend darauf eine jeweilige Schichtdickte des Wärmeleitmaterials (24) ermittelt wird.

6. Verfahren nach einem der vorhergehenden Ansprüche,
**dadurch gekennzeichnet, dass**
bei der Kapazitätsmessung fortlaufend ein Messignal an der Gehäuseseite und/der Wärmeübertragungsfläche (22) angelegt und zur Kapazitätsmessung ausgewertet wird.

7. Verfahren nach einem der vorhergehenden Ansprüche,
**dadurch gekennzeichnet, dass**
auf Basis der Kapazitätsmessung während des Setzvorgangs eine Prozessüberwachung im Hinblick auf einen Kurzschluss zwischen der Gehäusefläche (20) und der Wärmeübertragungsfläche (22) und/oder Lufteinschlüsse im Wärmeleitmaterial (24) durchgeführt wird.

8. Verfahren nach Anspruch 7,
**dadurch gekennzeichnet, dass**
falls bei der Prozessüberwachung ein Fehler festgestellt wird, der Setzvorgang unterbrochen und falls das Wärmeleitmaterial (24) noch nicht ausgehärtet ist, der Setzvorgang erneut unter Behebung des Fehlers durchgeführt wird.

9. System (10) zur thermischen Anbindung einer Wärmequelle (12) eines Batteriesystems an eine Wärmesenke (14) eines Batteriesystems, umfassend
- eine Setzvorrichtung (18), welche dazu ausgelegt ist, einen Setzvorgang durchzuführen, bei welchem ein Abstand zwischen einer elektrisch leitenden Gehäusefläche (20) der Wärmequelle (12) und einer elektrisch leitenden Wärmeübertragungsfläche (22), die Teil der der Wärmesenke (14) ist oder an die Wärmesenke (14) angrenzt, unter Verpressen eines dazwischen angeordneten elektrisch isolierenden Wärmeleitmaterials (24) verringert wird;
- eine Messvorrichtung (26), welche dazu ausgelegt ist, während des Setzvorgangs fortlaufend eine Kapazitätsmessung zwischen der Gehäusefläche (20) und der Wärmeübertragungsfläche (22) durchzuführen;
- eine Steuereinrichtung (30), welche dazu eingerichtet ist, basierend auf der Kapazitätsmessung eine Schichtdicke des Wärmeleitmaterials (24) zu überwachen und die Setzvorrichtung (18) bis zum Erreichen einer vorgegebenen Schichtdicke des Wärmeleitmaterials (24) anzusteuern.

## Claims

1. Method for thermally connecting a heat source (12) of a battery system to a heat sink (14) of the battery system, comprising the steps:
- carrying out a setting operation by means of a setting device (18), in which a distance between an electrically conductive housing surface (20) of the heat source (12) and an electrically conductive heat transfer surface (22), which is part of the heatsink (14) or adjoins the heatsink (14), is reduced by compressing an electrically insulating thermally conductive material (24) arranged between them;
- carrying out a continuous capacitance measurement between the housing surface (20) and the thermal transfer surface (22) by means of a measuring device (26) during the setting operation;
- monitoring a layer thickness of the thermally conductive material (24) and controlling the setting device (18) by means of a control apparatus on the basis of the capacitance measurement until a specified layer thickness of the thermally conductive material (24) is reached.

2. Method according to Claim 1,
**characterized in that**
the heat source (12) comprises a battery cell and/or an electronic component, the heatsink (14) being part of a cooling system of the battery system.

3. Method according to Claim 1 or 2,
**characterized in that**
the capacitance measurement is carried out by means of an AC voltage measurement.

4. Method according to one of the preceding claims, **characterized in that**
the capacitance measurement is carried out with a measuring frequency between 1 kHz and 100 kHz, in particular between 5 kHz and 20 kHz.

5. Method according to one of the preceding claims, **characterized in that**
results from a plurality of individual capacitance measurements are averaged and, on the basis thereof, a respective layer thickness of the thermally conductive material (24) is determined.

6. Method according to one of the preceding claims, **characterized in that**
during the capacitance measurement, a measuring signal is applied continuously to the housing side and/or heat transfer surface (22) and is evaluated for the capacitance measurement.

7. Method according to one of the preceding claims, **characterized in that**
on the basis of the capacitance measurement during the setting operation, process monitoring is carried out with regard to a short circuit between the housing surface (20) and the heat transfer surface (22) and/or air inclusions in the thermally conductive material (24).

8. Method according to Claim 7,
**characterized in that**
if a fault is detected during the process monitoring, the setting operation is discontinued and, if the thermally conductive material (24) has not yet hardened, the setting operation is carried out again, eliminating the fault.

9. System (10) for thermally connecting a heat source (12) of a battery system to a heatsink (14) of a battery system, comprising
- a setting device (18), which is designed to carry out a setting operation, in which a distance between an electrically conductive housing surface (20) of the heat source (12) and an electrically conductive heat transfer surface (22), which is part of the heatsink (14) or adjoins the heatsink (14), is reduced by compressing an electrically insulating thermally conductive material (24) arranged between them;
- a measuring device (26), which is designed to carry out a capacitance measurement continuously between the housing surface (20) and the heat transfer surface (22) during the setting operation;
- a control apparatus (30), which is configured to monitor a layer thickness of the thermally conductive material (24) on the basis of the capacitance measurement and to activate the setting device (18) until a specified layer thickness of the thermally conductive material (24) is reached.

## Revendications

1. Procédé de liaison thermique d'une source de chaleur (12) d'un système de batterie à un dissipateur thermique (14) du système de batterie, ledit procédé comprenant les étapes suivantes :
- réaliser un processus de réglage à l'aide d'un dispositif de réglage (18), dans lequel une distance entre une surface de boîtier électriquement conductrice (20) de la source de chaleur (12) et une surface de transfert de chaleur électriquement conductrice (22) qui fait partie du dissipateur thermique (14) ou qui est reliée au dissipateur thermique (14) adjacent, est réduite par compression d'un matériau thermoconducteur isolant (24) disposé entre lesdites surfaces ;
- effectuer une mesure de capacité continue entre la surface de boîtier (20) et la surface de transfert de chaleur (22) pendant le processus de réglage à l'aide d'un dispositif de mesure (26) ;
- surveiller une épaisseur de couche du matériau thermoconducteur (24) et commander le dispositif de réglage (18) à l'aide d'une unité de commande jusqu'à ce qu'une épaisseur de couche spécifiée du matériau thermoconducteur (24) soit atteinte sur la base de la mesure de capacité.

2. Procédé selon la revendication 1,
**caractérisé en ce que**
la source de chaleur (12) comprend une cellule de batterie et/ou un composant électronique, le dissipateur thermique (14) faisant partie d'un système de refroidissement du système de batterie.

3. Procédé selon la revendication 1 ou 2,
**caractérisé en ce que**
la mesure de capacité est effectuée à l'aide d'une mesure de tension alternative.

4. Procédé selon l'une des revendications précédentes,
**caractérisé en ce que**
la mesure de capacité est effectuée avec une fréquence de mesure comprise entre 1 kHz et 100 kHz, notamment entre 5 kHz et 20 kHz.

5. Procédé selon l'une des revendications précédentes,
**caractérisé en ce que**
des résultats de plusieurs mesures de capacité individuelles sont moyennés et, sur cette base, une épaisseur de couche respective du matériau thermoconducteur (24) est déterminée.

6. Procédé selon l'une des revendications précédentes, **caractérisé en ce que**, pendant la mesure de capacité, un signal de mesure est appliqué en continu sur le côté du boîtier et/ou sur la surface de transfert de chaleur (22) et évalué pour la mesure de capacité.

7. Procédé selon l'une des revendications précédentes,
**caractérisé en ce que**
sur la base de la mesure de capacité pendant le processus de réglage, une surveillance du processus est effectuée en ce qui concerne un court-circuit entre la surface de boîtier (20) et la surface de transfert de chaleur (22) et/ou des inclusions d'air dans le matériau thermoconducteur (24).

8. Procédé selon la revendication 7,
**caractérisé en ce que**
si une erreur est détectée pendant la surveillance du processus, le processus de réglage est interrompu et si le matériau thermoconducteur (24) n'a pas encore durci, le processus de réglage est réalisé à nouveau avec élimination de l'erreur.

9. Système (10) de liaison thermique d'une source de chaleur (12) d'un système de batterie à un dissipateur thermique (14) d'un système de batterie, ledit système de liaison thermique comprenant
- un dispositif de réglage (18) qui est conçu pour réaliser un processus de réglage dans lequel une distance entre une surface de boîtier électriquement conductrice (20) de la source de chaleur (12) et une surface de transfert de chaleur électriquement conductrice (22) qui fait partie du dissipateur de chaleur (14) ou qui est adjacente au dissipateur de chaleur (14), est réduite avec compression d'un matériau thermoconducteur électriquement isolant (24) disposé entre lesdites surfaces ;
- un dispositif de mesure (26) qui est conçu pour effectuer en continu une mesure de capacité entre la surface de boîtier (20) et la surface de transfert de chaleur (22) pendant le processus de réglage ;
- une unité de commande (30) qui est conçue pour surveiller une épaisseur de couche du matériau thermoconducteur (24) sur la base de la mesure de capacité et pour commander le dispositif de réglage (18) jusqu'à ce qu'une épaisseur de couche spécifiée du matériau thermoconducteur (24) soit atteinte.
